# FASCICULE DE BREVET EUROPEEN

(11) **EP 3 166 210 B1**
(45) Date de publication et mention de la délivrance du brevet: **09.10.2019**
(21) Numéro de dépôt: 16191674.7
(22) Date de dépôt: 30.09.2016
(51) Int. Cl.: H02K 3/48, H02K 15/00

(54) **MACHINE ELECTRIQUE TOURNANTE MUNI D'UN STATOR**
ELEKTRISCH UMLAUFENDE MASCHINE, DIE MIT EINEM STATOR AUSGESTATTET IST
ROTARY ELECTRIC MOTOR PROVIDED WITH A STATOR

(30) Priorité: 09.11.2015 FR 1560709
(43) Date de publication de la demande: 10.05.2017
(73) Titulaire: VALEO EQUIPEMENTS ELECTRIQUES MOTEUR, 94046 Créteil Cedex (FR)
(72) Inventeur: BILTERYST, Pierre-Yves, 62170 BRIMEUX (FR); DELIANNE, Henri, 62630 MARESVILLE (FR); MARGUERITTE, David, 62170 WAILLY BEAUCAMP (FR); JOZEFOWIEZ, Eric, 62770 LE PARCQ (FR); PERREAUT, Sylvain, 62162 Vieille-Eglise (FR); BALTHAZE, Patrice, 92310 SEVRES (FR); BATTUT, Julien, 59000 LILLE (FR)

(56) Documents cités:
- EP-A2- 1 463 184
- FR-A1- 2 708 157

## Description

### DOMAINE TECHNIQUE DE L'INVENTION

La présente invention porte sur une machine électrique tournante et plus particulièrement sur le stator d'une telle machine électrique tournante.

### ARRIERE PLAN TECHNOLOGIQUE

Il est connu d'utiliser des machines électriques tournantes dans les véhicules automobiles. Il peut s'agir d'un alternateur compact et polyphasé. Cet alternateur transforme de l'énergie mécanique en énergie électrique et peut être réversible. Un tel alternateur réversible est appelé alterno-démarreur et dans un autre mode de fonctionnement transforme de l'énergie électrique en énergie mécanique notamment pour démarrer le moteur thermique du véhicule.

Cette machine comporte essentiellement un carter 1 et, à l'intérieur de celui-ci, un rotor 2 à griffes, solidaire en rotation d'un arbre 3, et un corps stator 4, qui entoure le rotor avec présence d'un faible entrefer et qui comporte un corps en forme d'un paquet de tôles doté d'encoches, ici du type semi fermé, équipées d'isolant d'encoches pour le montage des phases du stator, comportant chacune au moins un enroulement formant de part et d'autre du corps du stator un chignon 5. Les enroulements sont obtenus par exemple à partir d'un fil continu recouvert d'émail ou à partir d'éléments conducteurs en forme de barre, tels que des épingles reliées entre elles par exemple par soudage.

Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR A 2 745 445 (US A 6 002 219) .

Le nombre de phases dépend des applications et peut être supérieur à trois, un ou deux ponts redresseurs pouvant être prévus .

Le rotor à griffes 2 comporte deux roues polaires 7, 8 axialement juxtaposées et de forme annulaire présentant chacune un flasque transversal pourvu à sa périphérie externe de dents 9 de forme trapézoïdale dirigées axialement vers le flasque de l'autre roue polaire, la dent d'une roue polaire pénétrant dans l'espace existant entre deux dents 9 adjacentes de l'autre roue polaire, de sorte que les dents des roues polaires soient imbriquées. les flasques des roues 7, 8 sont de forme annulaire et présentent à leur périphérie externe des saillies radiales (non référencées) raccordées par des chanfreins aux dents 9. Ces saillies forment des griffes avec les dents 9. Le nombre de dents 9 dépend des applications et notamment du nombre de phases du stator. Par exemple il peut être prévu huit dents par roue polaire. En variante chaque roue polaire comporte six ou sept dents.

Un noyau cylindrique est intercalé axialement entre les flasques des roues 7, 8. Ici ce noyau consiste en deux demi noyaux appartenant chacun à l'un des flasques. Ce noyau porte à sa périphérie externe un bobinage d'excitation 10. Un isolant, tel qu'une bobine de support du bobinage 10, est intercalé radialement entre le noyau et le bobinage 10.

L'arbre 3 du rotor 2 porte à son extrémité avant un organe d'entraînement, tel qu'une une poulie 12 appartenant à un dispositif de transmission de mouvements à au mois une courroie entre l'alternateur et le moteur thermique du véhicule automobile, et à son extrémité arrière 13, de diamètre réduit, des bagues collectrices reliées par des liaisons filaires aux extrémités du bobinage d'excitation du rotor. Les liaisons filaires et les bagues collectrices appartiennent ici à un collecteur rapporté du type de celui décrit dans le document FR 2 710 197. Des balais appartiennent à un porte-balais 14 et sont disposés de façon à frotter sur les bagues collectrices. Le porte-balais est relié à un régulateur de tension. Les extrémités avant et arrière de l'arbre 3 comportent donc chacune plusieurs tronçons.

Lorsque le bobinage d'excitation 10 est alimenté électriquement à partir des balais, le rotor 2, en matériau ferromagnétique, est magnétisé et devient un rotor inducteur avec formation de pôles magnétiques au niveau des dents des roues polaires.

Ce rotor inducteur 10 crée un courant induit alternatif dans le stator induit lorsque l'arbre 3 tourne, le ou les ponts redresseurs permettant de transformer le courant alternatif induit en un courant continu, notamment pour alimenter les charges et les consommateurs du réseau de bord du véhicule automobile, ainsi que pour recharger la batterie dudit véhicule.

Le carter 1 porte intérieurement à sa périphérie externe le corps de stator 4 et centralement à rotation l'arbre 3. Ce carter est ici en deux parties, à savoir un palier avant 16 adjacent à la poulie 12 et un palier arrière 17 portant le porte-balais, le régulateur de tension et au moins un pont redresseur. Les paliers sont de forme creuse et comportent chacun centralement un roulement à billes respectivement 19 et 20 pour le montage à rotation de l'arbre 3 du rotor 2. Le diamètre du roulement 19 est supérieur à celui du roulement 20.

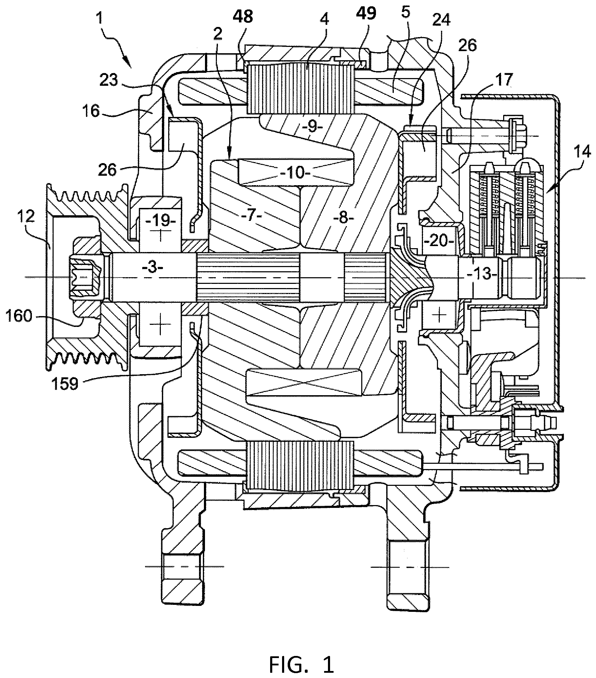

A la figure 1, il est prévu à la périphérie externe du corps du stator 4 un système élastique pour filtrer les vibrations, avec à l'avant un joint plat 48 et à l'arrière des tampons 49, de la résine souple et thermoconductrice étant intercalée entre le palier avant et le corps du stator pour évacuer la chaleur. En variante les paliers 16, 17 portent rigidement le corps du stator 4.

Les paliers sont, dans la figure 1, ajourés pour permettre le refroidissement de l'alternateur par circulation d'air. A cette fin, le rotor 2 porte au moins à l'une de ses extrémités axiales un ventilateur destiné à assurer cette circulation de l'air. Dans l'exemple représenté, un ventilateur 23 est prévu sur la face frontale avant du rotor et un autre ventilateur 24, plus puissant, sur la face dorsale arrière du rotor, chaque ventilateur étant pourvu d'une pluralité de pales 25, 26.

Dans ces machines ils se posent notamment deux problèmes sur le bobinage 5 du corps de stator 4. Premièrement, le bobinage n'est pas bien compacté et occupe une place dans l'encoche supérieure à celle qu'il pourrait occuper s'il était compacté. Cela est préjudiciable car pour un longueur de fil total donnée, l'ajout de cuivre dans les encoches permet d'augmenter les performances et notamment le rendement de la machine. Deuxièmement, le bobinage n'est pas bien fixé dans les encoches et peut dépasser dans le diamètre interne du stator ce qui induit un risque de collision avec le rotor en rotation.

Les solutions proposés selon l'état de la technique ne permettent pas de résoudre ce problème de manière satisfaisante.

Ainsi, il est connu du brevet US7808148 d'écraser radialement le fil afin d'augmenter sa largeur orthoradiale pour qu'il vienne en appui sur les bords de l'encoche. Cela étant, le fil et notamment son isolant risque d'être abimé au cours de cette opération.

Il est connu du brevet FR2900773 d'appliquer une compression radiale sur les fils d'une encoche afin d'augmenter leur distance orthoradiale. Cela étant, ce procédé s'applique spécifiquement aux encoches présentant deux colonnes de fils. Il ne propose pas de solution notamment pour les encoches présentant des fils alignés suivant une seule colonne.

Enfin, il est connu du brevet FR2708398 d'écraser radialement les fils sur la surface externe du rotor. Cette solution n'est pas applicable en tant que telle sur les encoches de stator car dans cet état de la technique, il s'agit de maintenir le fil dans des encoches de rotor.

En outre, le document EP1463184 décrit un stator dont les fils sont maintenus dans l'encoche par la formation d'un pied de dent et le document FR2708157 décrit un stator dont l'encoche et l'isolant d'encoche présentent chacun des formes permettant de maintenir les fils dans les encoches.

Il y a donc un besoin pour une solution permettant à la fois de maintenir le fil dans les encoches et de le compacter de manière reproductible et sans réduction des performances de la machine électrique. Ce besoin est encore plus imperieux dans le cas des stator présentant des encoches sans pieds de dent.

### OBJET DE L'INVENTION

L'invention a pour objet de répondre à ce souhait tout en remédiant à au moins un de ces inconvénients précités.

Selon l'invention, il est proposé un stator de machine électrique tournante comprenant:
- un corps de stator formé par un empilage de feuilles de tôles, ledit corps de stator étant muni d'un axe et étant délimité par une surface radiale interne et une surface radiale externe,
- des encoches aménagées dans ledit corps de stator et s'étendant axialement, deux encoches étant séparées par une dent, chacune des encoches présentant un fond d'encoche et une ouverture d'encoche, ladite ouverture d'encoche étant située du côté de ladite surface radiale interne,
- un bobinage de stator porté par ledit corps de stator, ledit bobinage comprenant plusieurs parties de bobinage chacune d'elles étant logée dans une desdites encoches, chacune des encoches étant munie au niveau de l'ouverture d'encoche d'au moins un élément de fermeture d'encoche de sorte que la partie de bobinage qui est logée dans ladite encoche est maintenue entre le fond d'encoche et ledit élément de fermeture, et selon une caractéristique générale de l'invention pour chacune des encoches, ledit élément de fermeture est formé par un décalage circonférentiel d'au moins une des feuilles de tôles de la dent adjacente en direction de ladite encoche, le dit décalage étant provoqué par une déformation de la dite encoche.

Cela permet la formation rapide et simple des éléments de fermeture, sans blesser le fil et sans diminuer les performances de la machine électrique. Par exemple, l'élement de fermeture peut être réalisé sur un stator sans pied de dent. Il joue alors le rôle de pied de dent. L'élément de fermeture d'encoche peut également être réalisé sur un stator déjà muni de pieds de dent.

Selon d'autres caractéristiques prises isolément ou en combinaison :
- une encoche sur deux comprend un nombre N d'éléments de fermeture, N étant un entier supérieur ou égal à 2 et les encoches restantes comprennent un nombre d'éléments de fermeture inférieur strictement à N, par exemple N-1. Cela permet d'avoir un nombre optimum d'élément de fermeture. On est pas obligé d'avoir le même nombre pour chaque encoche ;
- deux encoches ayant un nombre N d'éléments de fermeture sont accolés de part et d'autre d'une encoche ayant un nombre inférieur d'éléments de fermeture. Il s'agit d'une disposition interressante car elle permet d'avoir un groupe d'outils positionnés en face de deux encoches suivi d'une rotation d'un angle correspondant à de deux encoches du groupe d'outil par rapport au stator ;
- les encoches étant numérotées en suivant la circonférence du stator, les encoches de numéro pair comprennent un nombre d'éléments de fermeture différent de celui des encoches de numéro impair. Ainsi, on alterne le nombre d'éléments de fermeture en plus de la possibilité énoncé précédemment d'avoir un groupe d'outils cela permet également une bonne répartition des éléments fermeture;
- les éléments de fermeture des encoches sont repartis axialement sur la longueur axial du corps de stator. Cela permet d'avoir une bonne répartition des éléments de fermeture mais cette fois ci axialement afin notamment de réduire les contraintes sur les fils;
- au moins un des éléments de fermetures d'une encoche ayant un nombre inférieur d'éléments de fermeture est situé dans un plan radial passant par le milieu de deux éléments de fermeture adjacents d'une encoche comprenant les N élément de fermeture. Ainsi, en plus de permettre une répartition idéale des éléments de fermeture, on évite le phénomène d'interférence qui correspond à la déformation vers la droite et vers la gauche au même niveau axial d'une même dent ;
- pour une encoche donnée, les éléments de fermeture de cette encoche étant situés respectivement dans des premiers plans radiaux du corps de stator et les éléments de fermeture de l'encoche adjacente étant situés respectivement dans des deuxièmes plans radiaux du corps de stator, les premiers plans radiaux sont différents des deuxièmes plans radiaux. On évite ainsi le phénomène d'interférence mentionnés ci avant;
- les premiers plans radiaux et les deuxièmes plans radiaux sont distants axialement d'une distance égale à au moins deux feuilles de tôles. On définit une distance axiale entre les deux éléments de fermeture pour éviter le problème d'interférence;
- l'élément de fermeture est formé d'une part par le décalage d'au moins une des feuilles de tôles d'une encoche adjacente à droite en direction de ladite encoche et d'autre part par un décalage d'au moins une des feuilles de tôles d'une encoche adjacente à gauche en direction de ladite encoche, les deux décalages étant situés dans un même plan radial. Avec une encoche ayant un élément de fermeture comprenant deux décalages situés dans le même plan radial, le décalage nécessaire est moins important, on réduit ainsi les forces appliqué sur l'outil pour déformer les encoches;
- un élément de fermeture est formé par un décalage d'au moins deux feuilles de tôles contigues de telle sorte que l'élement de fermeture présente une hauteur axiale d'au moins deux feuilles de tôles. On définit ainsi une longueur axial de l'élément de fermeture;
- les deux bords d'encoche partant pour chaque encoche du fond d'encoche vers l'ouverture d'encoche sont chacun inscrits dans une droite avant la formation de l'élément de fermeture d'encoche. Bien que l'invention trouve son utilité pour les encoches muni de pieds de dents puisqu'elle y permet un meilleur maintien de la partie de bobinage et donc une réduction, voire une suppression de la cale de fermeture d'encoche, les besoins sont encore plus impérieux dans le cas où les encoches ne sont pas munis de pied de dents.
- pour chaque élément de fermeture d'une encoche, au moins une des deux encoches adjacentes présente des traces d'une déformation par introduction radiale d'un outil ayant une dimension orthoradiale supérieure à la largeur d'encoche. Cet outil permet une déformation orthoradiale simplement par sa translation radiale;
- pour chaque élément de fermeture d'une encoche, au moins une des deux encoches adjacentes présentes des traces d'une déformation par introduction radiale d'un outil de forme sensiblement sphérique. Il présente ainsi l'avantage d'avoir une largeur orthoradiale qui augmente progressivement pour un décalage des feuilles de tôle progressif. Il dispose également d'une capacité d'auto centrage au sein de l'ouverture d'encoche de sorte que les décalages vers l'encoche adjacente à droite et à gauche seront équilibrés, voire égaux. Enfin, cette forme arrondie permet d'éviter de ne pas blesser le fil lorsqu'on utilise l'outil pour compacter la partie du bobinage;
- pour chaque élément de fermeture d'une encoche, au moins une des deux encoches adjacentes présentes des traces d'une déformation par introduction radiale forme d'un prisme triangulaire ayant des arrêtes arrondies.
- la partie de bobinage d'une encoche présente les traces d'un compactage par ladite introduction radiale d'un outil. L'action de compactage peut être facilement adjointe à la formation des éléments de fermeture d'encoche. Cela est du notamment à l'introduction radiale de l'outil dans l'encoche;
- la partie de bobinage d'une encoche comprend plusieurs fils alignés suivant une colonne, par exemple une unique colonne;
- la partie de bobinage d'une encoche comprend plusieurs fils alignés suivant deux colonnes parallèles. Par exemple, les fils sont alignés suivant deux colonnes jusqu'à l'avant dernier rang en partant du fond d'encoche, le dernier rang étant occupé par un seul fil;
- Le nombre d'éléments de fermeture est identique pour chacune des encoches.
- L'invention a également pour objet une machine comprenant un stator tel que définit précédemment.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
la figure 1 déjà décrite est une vue d'une machine électrique tournante
La figure 2 représente une vue en perspective d'un corps de stator d'une machine électrique tournante sous la forme d'un alternateur;
la figure 3 est une vue d'un détail de corps de stator selon un autre mode de réalisation de l'invention ;
la figure 4 est une vue en perspective d'un stator selon l'invention comprenant un corps de stator et un bobinage;
les figures 5, 6, 7,8 et 9 sont des vues selon une coupe radiale du stator selon la figure 4 ;
la figure 10 est une vue interne du stator selon l'invention ;
la figure 11 est une vue schématique des étapes du procédé selon l'invention.

Les éléments identiques, similaires, ou analogues conservent la même référence d'une figure à l'autre.

### DESCRIPTION D'EXEMPLES DE REALISATION DE L'INVENTION

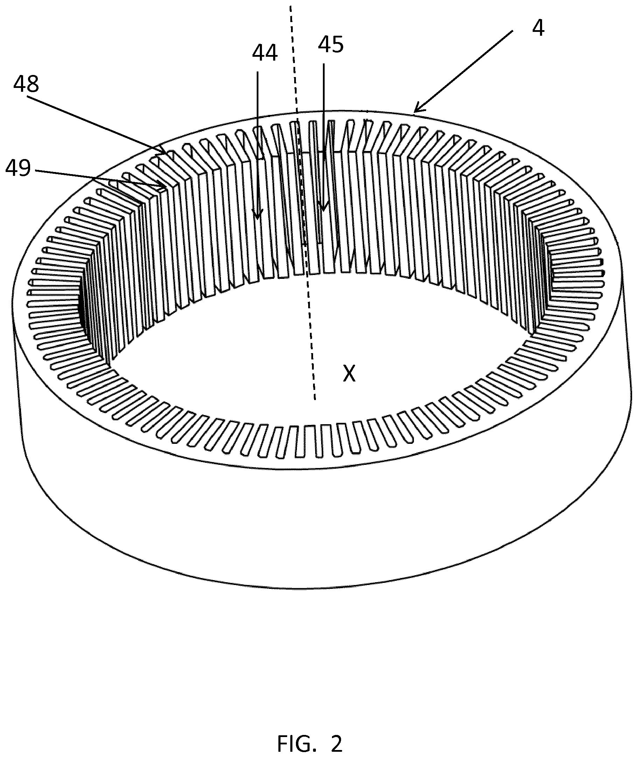

La figure 2 illustre un corps de stator 4 pour une machine électrique tournante. Le corps de stator formé par un empilage de feuilles de tôles. Il est muni d'un axe X et est délimité par une surface radiale interne et une surface radiale externe. Des encoches 44 sont aménagées dans le corps de stator. Ces encoches 44 s'étendant axialement, deux encoches 44 étant séparées par une dent 45. Chacune des encoches 44 présente un fond d'encoche 48 et une ouverture d'encoche 49. L'ouverture d'encoche est située du côté de la surface radiale interne. Pour chaque encoche, on définit entre l'ouverture d'encoche et le fond d'encoche une profondeur radiale d'encoche.

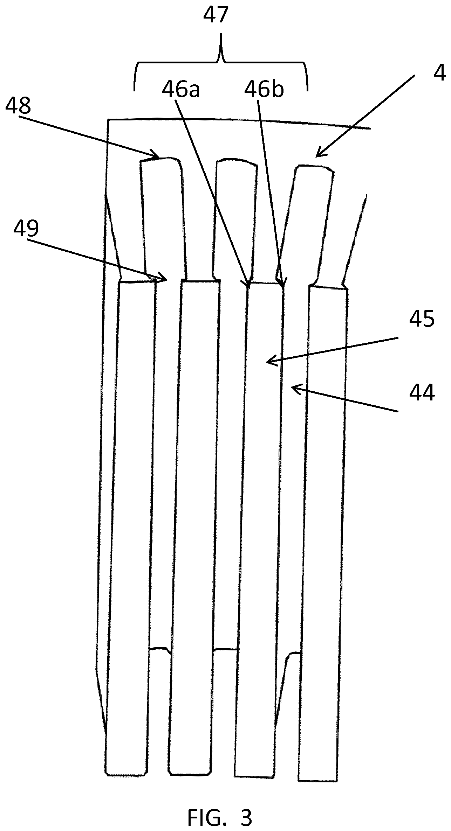

La figure 3 illustre un corps de stator 4 pour une machine électrique tournante selon un autre mode de réalisation de l'invention. Ce mode de réalisation diffère de celui de la figure 2 de par la présence d'un pied de dent 47 sur chacune des dents 45. Le pied de dent 47 est formé par deux saillies de direction orthoradiale, une vers la gauche 46a et une autre vers la droite 46b.

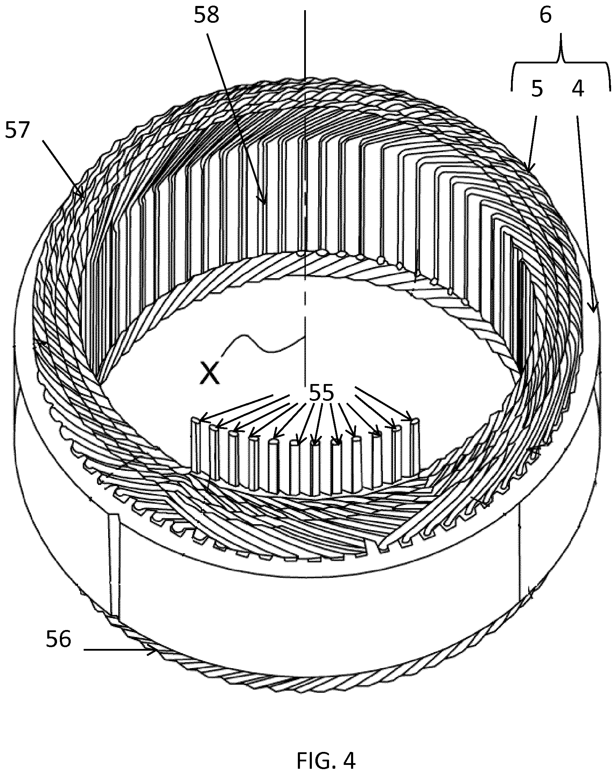

La figure 4 illustre un corps de stator 4 portant un bobinage 5. Le corps de stator 4 et le bobinage forment un stator 6 de machine électrique tournante. En d'autres termes, le stator 6 de machine électrique comprend un corps de stator 4 muni d'encoches 44 et un bobinage 5. Le bobinage 5 comprend plusieurs parties de bobinage 58 chacune d'elles étant logée dans une desdites encoches 44. Le bobinage comprend deux chignons 56 et 57 situés de part et d'autre axialement du corps de stator. Les parties de bobinage 58 relient les chignons 56 et 57. Le bobinage comprend en outre des entrée sorties 55 qui font saillies axialement par rapport au chignon 57.

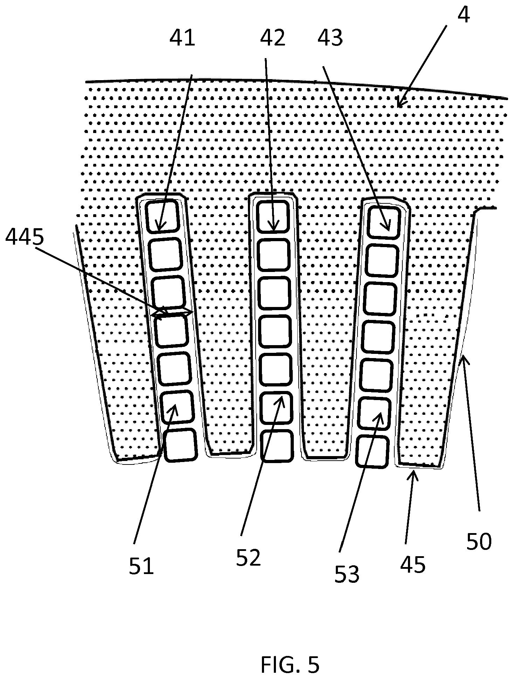

La figure 5 illustre un détail du stator 6 de la figure 4. Plus précisément, il s'agit d'une coupe suivant un plan radial qui est utilisé comme synonyme à perpendiculaire à l'axe X dans la suite de la description. Sur cette figure sont illustrées trois encoches 41, 42 et 43 recevant respectivement les parties de bobinage 51, 52 et 53. Les encoches 41, 42 et 43 sont séparées par les dents 45. Les dents et les encoches sont recouvertes d'un papier isolant 50 également appelé isolant. Cet isolant est nécessaire pour assurer une isolation électrique entre les parties de bobinage 54 et le corps du stator 4. En effet, lors du fonctionnement de la machine électrique les parties de bobinage sont traversées par un courant alors que le corps est au potentiel de la masse électrique. L'épaisseur de l'isolant est de l'ordre du dixième de milimètre. Comme on peut le voir sur la figure 5, les parties de bobinage 51, 52 et 53 comprennent par exemple 7 fils par encoche alignés suivant une colonne radiale. Les parties de bobinage ne sont pas compactées de sorte que le dernier fil du coté de l'ouverture d'encoche dépasse de la surface radiale interne du corps de stator. On définit pour chaque encoche, une largeur d'encoche 445 qui correspond à la distance suivant une direction orthoradiale entre les deux bords de l'encoche. On définit également pour chaque encoche une largeur d'insertion correspondant à la distance orthoradiale entre les deux bords de l'encoche quand ils sont recouverts du papier isolant 50. Sur le stator de la figure 5, il apparait que les fils ne sont pas maintenus au niveau de l'ouverture d'encoche et présentent un diamètre inférieur à la largeur d'insertion. Il y a donc risque pour que le dernier fil du côté de l'ouverture d'encoche sorte complétement de l'encoche 54. Pour le mode de réalisation de la figure 5, les deux bords d'encoche partant pour chaque encoche du fond d'encoche vers l'ouverture d'encoche sont inscrits respectivement dans une droite avant la formation de l'élément de fermeture d'encoche. Toutefois, l'invention s'applique également sur le stator illustré dans la figure 2, selon lequel chaque dent est munie de pieds de dent.

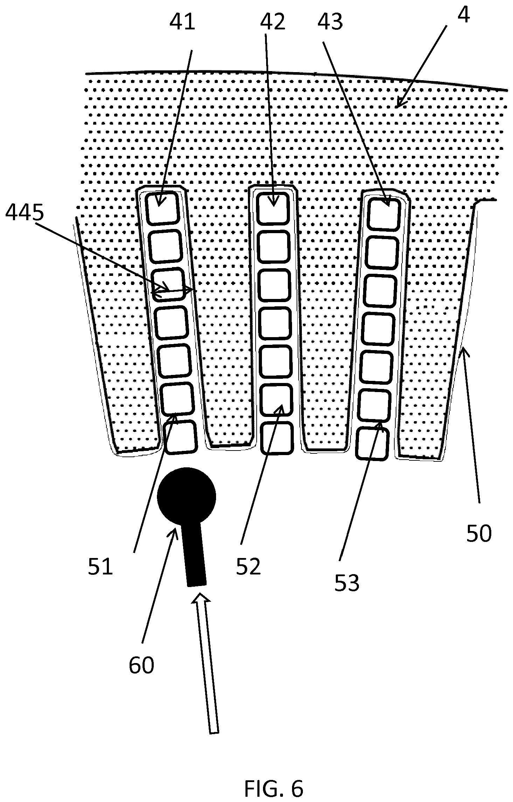

La figure 6 illustre l'arrivée d'un outil 60 sur l'encoche 41 dont l'action supprime le risque mentionné ci dessus. L'outil est déplacé par translation suivant un rayon aligné avec l'encoche 41 et par exemple au sein d'un premier plan radial perpendiculaire à l'axe X. En d'autres termes, l'outil est déplacé radialement par rapport à l'encoche dans laquelle il doit être introduit. L'outil illustré sur la figure 6 présente une forme sphérique, elle a l'avantage de ne pas blesser le fil et de présenter une largeur orthoradiale progressive qui permet un centrage de l'outil dans l'ouverture d'encoche. Toutefois, toute forme d'outil est appropriée du moment qu'elle présente une distance supérieur à la largeur d'enchoche 445.

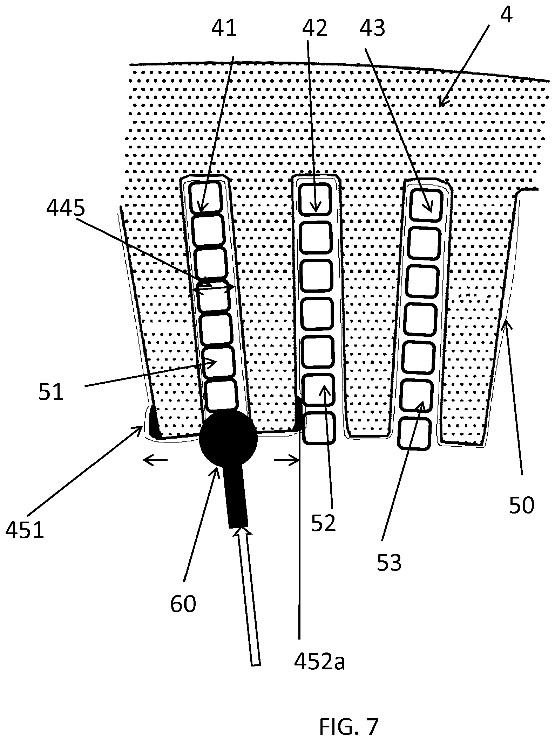

La figure 7 illustre la poursuite du déplacement de l'outil 60 en direction de l'ouverture d'encoche de l'encoche 41. La poursuite de ce déplacement implique un compactage de la partie de bobinage 51 de l'encoche 41. Ainsi, le dernier fil ne dépasse plus de la surface radiale interne du corps de stator. La poursuite du déplacement implique également la formation de deux éléments de fermeture 451 et 452a. Les éléments de fermeture 451 et 452a sont formés par le décalage d'une partie des feuilles de tôles de l'encoche 41 recevant l'outil respectivement vers la gauche et vers la droite comme illustré sur la figure 7 par les deux flèches. Ainsi, les éléments de fermeture 451 et 452a font saillis dans une direction orthoradiale au sein respectivement d'une encoche non numérotée et de l'encoche 42.

En d'autres termes, au moins une des encoches est munie au niveau de l'ouverture d'encoche d'au moins un élément de fermeture d'encoche de sorte que la partie de bobinage qui est logée dans ladite encoche est maintenue entre le fond d'encoche et ledit élément de fermeture. L'élément de fermeture est formé par un décalage d'au moins une des feuilles de tôles d'une encoche adjacente en direction de ladite encoche.

Bien entendu, on pourrait également prévoir N outils 60 répartis axialement sur l'encoche 41, il provoquerait alors la formation de 2 N éléments de fermeture répartis axialement. On aurait également un meilleur compactage de la partie de bobinage 51 de l'encoche 41 grâce aux appui radiaux répartis axialement. A cet effet, on peut munir un unique ustensile pourvu desdits N outils 60, afin de faciliter leur manipulation.

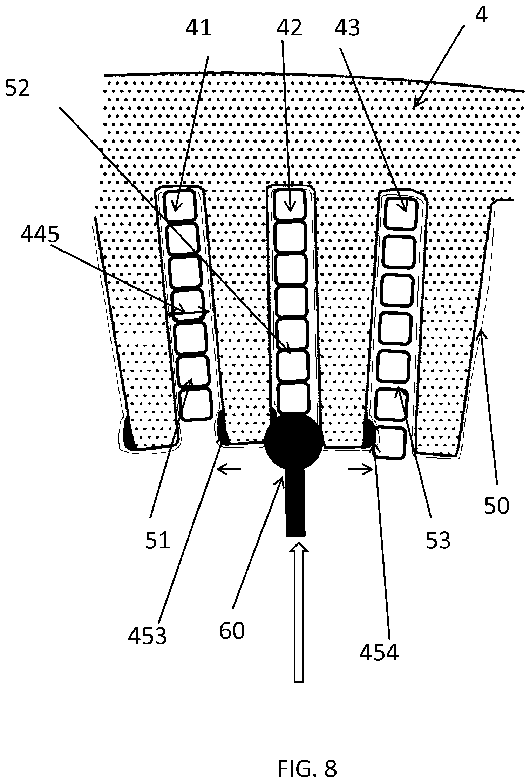

La figure 8 illustre le déplacement d'un outil 60 en direction de l'ouverture d'encoche de l'encoche 42. Selon un premier mode de réalisation, l'outil 60 illustré sur la figure 8 est le même que celui de la figure 7. Il est situé en face de l'encoche 42 à l'aide d'un mouvement relatif de rotation de l'outil par rapport au stator. Selon un exemple de ce premier mode de réalisation, pour passer de la configuration de la figure 7 à celle de la figure 8 on fait se retracter l'outil 60, on fait tourner le stator et on déplace l'outil 60 en direction de l'encoche 42. Selon un deuxième mode de réalisation, l'outil 60 est un outil supplémentaire à celui illustré sur la figure 7. Il est différent de part le fait qu'il est situé en face d'une autre encoche, l'encoche 42 alors que l'outil de la figure 7 est en face de l'encoche 41. Selon un exemple de ce deuxième mode de réalisation, on fait se retracter l'outil 60 de la figure 7 puis on déplace l'outil 60 de la figure 8 en direction de l'encoche 42.

Selon le premier ou deuxième mode de réalisation, on obtient le décalage d'une partie des feuilles de tôles de l'encoche 42. Les éléments de fermeture 453 et 454 sont ainsi formés par ce décalage des feuilles de tôles de l'encoche 42 recevant l'outil respectivement vers la gauche et vers la droite comme illustré sur la figure 8 par les deux flèches. Ainsi, les éléments de fermeture 453 et 454 font saillis dans une direction orthoradiale au sein respectivement de l'encoche 41 et de l'encoche 43. Selon ces deux modes de réalisation, le déplacement de l'outil implique également un compactage de la partie de bobinage 52 de l'encoche 42. Ainsi, le dernier fil ne dépasse plus de la surface radiale interne du corps de stator.

Dans le cas du premier mode de réalisation, selon un exemple de réalisation, l'outil 60 garde la même position axial par rapport au stator. On obtient alors des éléments de fermeture, 451, 452a, 453 et 454 qui sont situés dans un même plan radial. Selon un autre exemple de réalisation, il serait possible de prévoir un déplacement axial relatif de l'outil 60 par rapport au stator 4. Ce déplacement axial relatif est réalisé par exemple en même temps que la rotation relative du stator 4 par rapport à l'outil 60. On obtient alors que les éléments de fermeture, 451, 452a sont situés dans un premier plan radial et que les éléments de fermeture 453 et 454 sont situés dans un deuxième plan radial, ce premier et ce deuxième plans radiaux étant différents. Par exemple le premier et le deuxième plan radiaux sont situés à une distance supérieure à deux feuilles de tôles.

Dans le deuxième mode de réalisation, il est possible de prévoir que l'outil 60 de la figure 7 et celui de la figure 8 sont situés dans un premier et deuxième plans radiaux sensiblement différents. Par exemple, le premier plan radial et le deuxième plan radial sont distants axialement d'une distance égale à au moins deux feuilles de tôles. On obtient alors que les éléments de fermeture, 451, 452a sont situés dans le premier plan radial et que les éléments de fermeture 453 et 454 sont situés dans le deuxième plan radial, ce premier et ce deuxième plans radiaux étant différents.

Comme cela a déjà mentionné pour la figure 7, bien entendu, on pourrait également prévoir N outils 60 répartis axialement sur l'encoche 42, ils provoqueraient alors la formation de 2 N éléments de fermeture répartis axialement. On aurait également un meilleur compactage de la partie de bobinage 52 de l'encoche 42 grâce aux appui radiaux répartis axialement. A cet effet, on peut munir un unique ustensile desdits N outils 60, afin de faciliter leur manipulation.

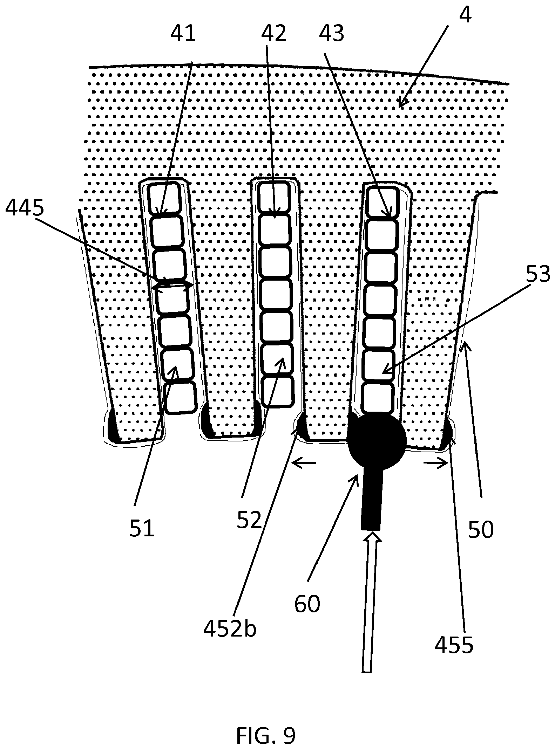

La figure 9 illustre le déplacement d'un outil 60 en direction de l'ouverture d'encoche de l'encoche 43. Comme déjà mentionné, l'outil 60 illustré sur la figure 9 peut être le même que celui de la figure 8. Il peut aussi être différent. Il est également possible de prévoir un outil 60 qui n'est pas identique à celui en face de l'encoche 42 mais identique à celui en face de l'encoche 41. Il s'agit alors par exemple d'un procédé de fermeture d'encoche comprenant deux outils situés en face de deux encoches consécutives au cours duquel après une étape de déplacement vers l'ouverture d'encoche et une étape de rétractation des deux outils, les deux outils sont déplacés en rotation d'un angle correspondant à deux encoches par rapport au stator.

Les éléments de fermeture 452b et 455 formé par l'outil 60 sont en tout état de cause dans le plan de l'outil 60 de la figure 9.

On constate que les éléments de fermeture 453 et 452a d'une part et 454 et 452b d'autre part sont situés sur respectivement sur une même dent 45. Il apparait donc qu'il peut être favorable que les éléments de fermeture 453 et 452a d'une part soient dans deux plans radiaux différents et qu'également 454 et 452b soient dans deux plans radiaux différents.

Le fait de choisir que les éléments de fermeture 453 et 452a soient dans deux plans radiaux différents permet en effet d'éviter que la formation de l'élément de fermeture 453 par décalage des feuilles de tôles vers la gauche ne vienne interférer avec la formation de l'élément de fermeture 452a par décalage des feuilles de tôles vers la droite.

De même, le fait de choisir que les éléments de fermeture 454 et 452b soient dans deux plans radiaux différents permet d'éviter que la formation de l'élément de fermeture 452b par décalage des feuilles de tôles vers la gauche ne vienne interférer avec la formation de l'élément de fermeture 454 par décalage des feuilles de tôles vers la droite.

Ce phénomène illustré à titre d'exemple pour les éléments de formation 453, 452a d'une part et 454 et 452b d'autre part est appelé interférence dans la suite de la description.

Le dimensionnement de l'outil 60 est fonction notamment de la taille de fil, de la profondeur radiale de l'encoche, de la largeur d'encoche, de la largeur d'insertion, de la largeur de l'isolant et du nombre de fils par encoche.

Par exemple, en référence aux figures 7 et 9, on a une largeur d'encoche de 1,95 mm, une taille de fil de l'ordre de 1,56 mm, et un isolant présentant une épaisseur de 0.13mm. On obtient donc une largeur d'insertion de 1,95 - 2 x 0,13 = 1,69, alors que le fil a une taille de 1,56 mm. Par ailleurs, la profondeur radiale de l'encoche est de l'ordre de 12.5 mm. On obtient donc en prenant en compte le fait que le fond d'encoche est couvert d'isolant, une profondeur pour la partie de bobinage égale à 12,5 - 0,13 = 12,37 mm. L'objectif est d'obtenir un compactage suffisant pour qu'au moins l'ensemble des 7 conducteurs puissent rentrer dans cette longeur de 12,37 mm. Selon un exemple de réalisation on peut définir que l'écart radial entre deux fils soit au maximum de 0,1 mm. On en déduit qu'il faut alors une pénétration de l'outil 60 d'une valeur comme calculé ci dessous dans l'encoche: 12,37 - (7 x 1,56 + 6 x 0,1) = 0,85 mm.

On doit alors définir une forme d'outil qui permette pour cette valeur de pénétration de 0,85 mm un décalage suffisant des feuilles de tôles pour permettre un maintien du fil dans les encoches adjacentes. Ce décalage nécessaire peut se calculer en fonction de la différence entre la largeur d'insertion et la taille de fil. La valeur du décalage dépend en outre de la présence de deux décalages en face l'un de l'autre dans une même encoche et dans un même plan radial pour l'élément de fermeture. Concrétement la valeur du décalage doit être plus importante si l'élément de fermeture est formé uniquement par le décalage vers la droite de la dent entre les encoches 41 et 42 ou par le décalage vers la gauche de la dent entre les encoches 42 et 43. Au contraire, si l'élément de fermeture est formé par le décalage vers la droite de la dent entre les encoches 41 et 42 et par le décalage vers la gauche de la dent entre les encoches 42 et 43 alors la valeur de chacun des deux décalages peut être moins importante.

Ainsi, dans le cas où l'élément de fermeture 452 est formé uniquement par le décalage 452a ou 452b alors il faut un décalage qui compense au moins la différence entre la largeur d'insertion et la taille de fil, c'est à dire: 1,69 - 1,56 = 0,13 mm.

Dans le cas où l'élément de fermeture est formé par le décalage 452a et le décalage 452b alors il suffit d'un décalage deux fois moins important si l'on suppose par exemple que le décalage 452a est égal au décalage 452b, c'est à dire (1,69 - 1,56 )/2 = 0.065.

On a donc une forme d'outil qui doit permettre par rapport à la largeur d'insertion de 1,56 mm, pour une introduction de 0,85 mm, un décalage d'au moins 0,13 mm ou 0,065 mm sur chacune des deux dents. Dans le cas d'un outil de forme sphérique, cela est possible avec une sphère présentant un diamètre de 4 mm.

Par ailleurs, on peut citer trois modes de réalisation listés ci dessous à titre d'exemple:
mode de réalisation 1: l'outil des encoches 41, 42 et 43 est identique. Selon un exemple de ce mode de réalisation, si l'on prévoit seulement une rotation relative du stator par rapport à l'outil, on a alors les éléments de fermeture 451, 452a, 453, 454, 455 et 452b qui sont situés dans le même plan radial. On a alors notamment un unique élément de fermeture 452 formé par les deux éléments 452a et 452b.
mode de réalisation 2: les outils des encoches 42 et 43 sont différents. Selon un exemple de ce mode de réalisation, on a alors les éléments de fermeture 453 et 454 d'une part et 455 et 452b d'autre part qui sont situés par groupe de deux dans deux plans radiaux différents.
mode de réalisation 3: l'outil des encoches 41 et 43 est identique. Selon un exemple de ce mode de réalisation, si l'on prévoit seulement une rotation relative du stator par rapport à l'outil, on a alors les éléments de fermeture 451, 452a, 455 et 452b qui sont situés dans le même plan radial. Tandis que les éléments de fermeture 453 et 454 sont par exemple situés dans un autre plan radial. On évite ainsi le phénomène d'interférence mentionné ci dessus. On obtient également un unique élément de fermeture 452 formé par les deux éléments 452a et 452b.

Comme cela a déjà mentionné pour les figures 7 et 8, bien entendu, on pourrait également prévoir N outils 60 répartis axialement sur l'encoche 43, il provoquerait alors la formation d'un maximum de 2 N éléments de fermeture répartis axialement. On aurait également un meilleur compactage de la partie de bobinage 53 de l'encoche 43 grâce aux appui radiaux répartis axialement.

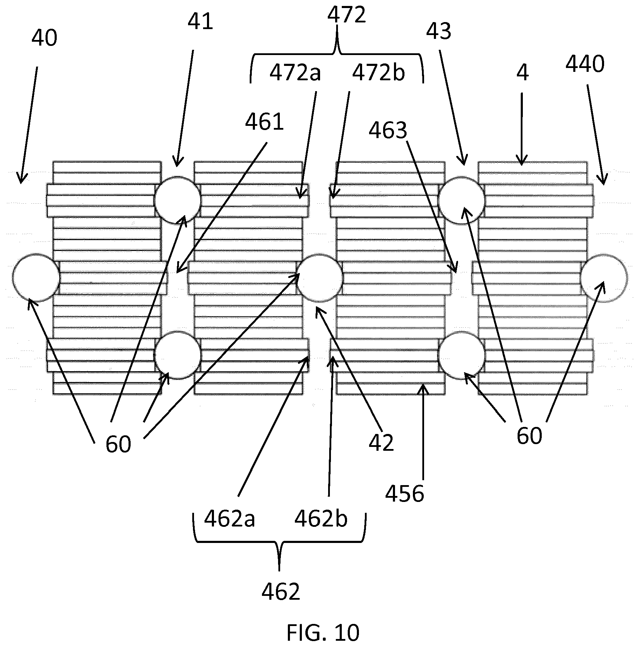

On a illustré sur la figure 10, N=2 outils pour les encoches 41 et 43 et N=1 outil pour l'encoche 42. Plus généralement, selon la figure 10, on a une encoche sur deux déformée avec un outil et les encoches restantes avec deux outils. On a également, une encoche déformée avec un outil entouré de deux encoches déformées avec deux outils.

En d'autres termes, une encoche sur deux comprend un nombre N d'éléments de fermeture, N étant un entier supérieur ou égal à 2 et les encoches restantes comprennent un nombre inférieur d'éléments de fermeture. Par exemple, un nombre N d'élément de fermeture sont accolés de part et d'autre d'une encoche ayant un nombre N-1 d'éléments de fermeture. Selon un exemple, les encoches étant numérotées en suivant la circonférence du stator, les encoches de numéro pair comprennent un nombre d'éléments de fermeture dfférent de celui des encoches de numéro impair.

Comme on peut le voir pour l'encoche 42, les éléments de fermeture 472 et 462 sont repartis axialement sur la longueur axial du corps de stator. Par ailleurs, comme on peut le voir pour l'encoche 41 ou 43 comprenant N-1 éléments de fermeture l'élément de fermeture 461 ou 463 est situé dans un plan radial passant par le milieu de deux éléments de fermeture adjacents de l'encoche 42.

On constate que pour l'encoche 42 par exemple, les éléments de fermeture 462 et 472 de cette encoche sont situés respectivement dans des premiers plans radiaux du corps de stator et les éléments de fermeture 461 ou 463 de l'encoche adjacente 41 ou 43 sont situés respectivement dans des deuxièmes plans radiaux du corps de stator, les premiers plans radiaux sont différents des deuxièmes plans radiaux. Par exemple, les premiers plans radiaux et les deuxièmes plans radiaux sont distant axialement d'une distance égale à au moins deux feuilles de tôles.

Comme on peut le voir pour l'encoche 41 ou 43 l'élément de fermeture 461 ou 463 est formé d'une part par le décalage d'au moins une des feuilles de tôles d'une encoche adjacente à droite en direction de ladite encoche et d'autre part un décalage d'au moins une des feuilles de tôles d'une encoche adjacente à gauche en direction de ladite encoche, les deux décalages étant situés dans un même plan radial. De même pour l'encoche 42, les deux éléments de fermeture 472 et 462 sont formés d'une part par le décalage d'au moins une des feuilles de tôles d'une encoche adjacente à droite 43 en direction de ladite encoche et d'autre part un décalage d'au moins une des feuilles de tôles d'une encoche adjacente à gauche 41 en direction de ladite encoche, les deux décalages étant situés dans un même plan radial.

Par exemple, un élément de fermeture est formé par un décalage d'au moins deux feuilles de tôles contingues de telle sorte que l'élement de fermeture présente une hauteur axiale d'au moins deux feuilles de tôles.

Selon la figure 10, pour chaque élément de fermeture d'une encoche, au moins une des deux encoches adjacentes présente des traces d'une déformation par introduction radiale d'un outil ayant une dimension orthoradiale supérieure à la largeur d'encoche. Par exemple pour chaque élément de fermeture d'une encoche, au moins une des deux encoches adjacentes présentes des traces d'une déformation par introduction radiale d'un outil de forme sensiblement sphérique.

Selon un mode de réalisation, le groupe des deux outils de l'encoche 41 et le groupe des deux outils de l'encoche 43 sont identiques. A cet effet, on peut munir un unique ustensile du groupe des deux outils 60 qui déforme les encoches 41 et 43.

Selon un exemple de ce mode de réalisation, on peut prévoir seulement une rotation relative d'un angle correspondant à deux encoches du stator par rapport à l'ustensile, pour passer de l'encoche 41 à l'encoche 43. On a alors notamment pour l'encoche 42 un élément de fermeture 472a ou 462a issu de la déformation de l'encoche 41 dans le même plan radial qu'un élément de fermeture 472b ou 462b issu de la déformation de l'encoche 43. En d'autres termes, le premier groupe d'éléments de fermeture 472a et 472b et le deuxième groupe d'éléments de fermeture 462a et 462b sont chacun dans un plan radial et chacun de ces deux groupes forment ainsi un unique élément de fermeture 462 ou 472.

Selon un exemple de ce mode de réalisation, les éléments de fermeture formés 461 et 463 par la déformation de l'encoche 42 peuvent être situés dans d'autre plans radiaux que les éléments de fermeture 462 et 472 de l'enchoche 42. On évite ainsi le phénomène d'interférence mentionné ci dessus.

Selon un mode de réalisation, on peut prévoir également que l'outil 60 déformant les encoches 40, 42 et 44 est identique et peut agir sur les différentes encoches mentionnés ci avant par rotation d'un angle correspondant à deux encoches. Dans ce cas, les éléments de fermeture (notamment 461, 463) formés par la déformation des encoches 40, 42 et 440 peuvent être situés dans le même plan radial qui est différent des plans radiaux des éléments de fermeture issus de la déformation de l'encoche 41 ou de l'encoche 43. On évite ainsi également le phénomène d'interférence mentionné ci dessus.

Plus généralement, on ne sort pas du cadre de l'invention dans les cas ci dessous donnés à titre d'exemple.

Cas 1 (non illustré sur la figure 10): les groupes de N outils agissant sur les encoches successives sont le même groupe. Selon un exemple de ce mode de réalisation, si l'on prévoit seulement une rotation relative du stator par rapport à l'outil, on a alors un nombre de plans radiaux comprenant au moins un élément de fermeture égal à N et chacun des plans radiaux comprend le même nombre d'éléments de fermeture.

Cas 2: le groupe des outils agissant sur l'encoche 42 est différent de celui agissant sur l'encoche 43. Selon un exemple de ce deuxième cas, les éléments de fermeture 461 et 463 issus de la déformation de l'encoche 42 sont situés dans des plans différents de ceux des éléments de fermeture 472b et 462b issus de la déformation de l'encoche 43. En d'autres termes pour une dent référencée 456 sur la figure 10, les décalages des feuilles de tôles vers la gauche 472b et 462b provoqués par la déformation de l'encoche 43 et les décalages des feuilles de tôles vers la droite 472a et 462a provoqués par la déformation de l'encoche 42 ne vont jamais se situer dans le plan radial et on évite le phénomène d'interférence mentionné ci dessus.

Cas 3: les groupes de N outils agissant sur les encoches 41 et 43 sont le même groupe. Selon un exemple de ce cas, si l'on prévoit seulement une rotation relative du stator par rapport au groupe de N outils, on a alors notamment pour l'encoche 42 pour les éléments de fermeture 472a et 462a issus de la déformation de l'encoche 41 un élément de fermeture 467a ou 462b issu de la déformation de l'encoche 43 qui est dans le même plan radial. Les deux éléments de fermeture dans le même plan radial issu respectivement de la déformation de l'encoche 41 et de la déformation de l'encoche 43 forment un unique élément de fermeture 462 ou 472. Selon un exemple, ce cas 3 peut être combiné avec le cas 2 de ce mode de réalisation et on évite ainsi pour notamment la dent 456 le phénomène d'interférence mentionné ci dessus.

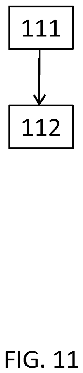

La figure 11 illuste un procédé de réalisation d'un stator de machine électrique tournante comme illustré ci dessus. Le procédé comprend une étape de fermeture 111 qui comprend une étape de fermeture comprend une étape de décalage d'au moins une des feuilles de tôle d'une encoche adjacente en direction de ladite encoche.

Par exemple, l'étape de décalage est réalisée sur une hauteur axiale d'au moins deux feuilles de tôles. Comme cela été illustré ci dessus, l'étape de décalage comprenant une étape d'introduction d'un outil suivant une direction radiale, ledit outil présentant une dimension orthoradiale supérieure à la largeur d'encoche.

Par ailleurs, le procédé comprend également une étape de compactage 112 de la partie de bobinage logée dans l'encoche dans laquelle est introduit suivant une direction radiale l'outil. Selon un mode de réalisation, ce compactage est réalisé lors de ladite étape de décalage.

## Revendications

1. Stator (6) de machine électrique tournante (1) comprenant:
- un corps de stator (4) formé par un empilage de feuilles de tôles, ledit corps de stator étant muni d'un axe (X) et étant délimité par une surface radiale interne et une surface radiale externe,
- des encoches aménagées (44) dans ledit corps de stator et s'étendant axialement, deux encoches étant séparées par une dent (45), chacune des deux encoches présentant un fond d'encoche (48) et une ouverture d'encoche (49), ladite ouverture d'encoche étant située du côté de ladite surface radiale interne,
- un bobinage de stator (5) porté par ledit corps de stator, ledit bobinage comprenant plusieurs parties de bobinage (51, 52, 53) chacune d'elles étant logée dans une desdites encoches,
chacune des encoches (44, 41, 42, 43) étant munie au niveau de l'ouverture d'encoche d'au moins un élément de fermeture d'encoche (451, 452, 453, 454) de sorte que la partie de bobinage qui est logée dans ladite encoche est maintenue entre le fond d'encoche et ledit élément de fermeture, et
**caractérisé en ce que** pour chacune des encoches, ledit élément de fermeture est formé par un décalage circonferentiel (451, 452a ,452b, 453, 454) d'au moins une des feuilles de tôles de la dent (45) adjacente en direction de ladite encoche, ledit décalage étant provoqué par une déformation de ladite encoche.

2. Stator selon la revendication 1, **caractérisé en ce qu'**une encoche sur deux comprend un nombre N d'éléments de fermeture, N étant un entier supérieur ou égal à 2 et les encoches restantes comprennent un nombre d'éléments de fermeture inférieur strictement à N.

3. Stator selon la revendication 2, **caractérisé en ce que** deux encoches ayant un nombre N d'élément de fermeture sont accolés de part et d'autre d'une encoche ayant un nombre inférieur d'éléments de fermeture.

4. Stator selon l'une des revendications précédentes, **caractérisé en ce que** les encoches étant numérotées en suivant la circonférence du stator, les encoches de numéro pair comprennent un nombre d'éléments de fermeture différent de celui des encoches de numéro impair.

5. Stator selon l'une des revendications précédentes, **caractérisé en ce que** les éléments de fermeture des encoches (42) sont repartis axialement sur la longueur axial du corps de stator.

6. Stator selon la revendication 5 quand dépendante de la revendication 2, **caractérisé en ce que** au moins un des éléments de fermetures d'une encoche (41, 43) ayant un nombre inférieur d'éléments de fermeture est situé dans un plan radial passant par le milieu de deux éléments de fermeture adjacents d'une encoche (42) comprenant les N élément de fermeture.

7. Stator selon l'une quelconques des revendications 1 à 5, **caractérisé en ce que** pour une encoche donnée (42), les éléments de fermeture de cette encoche étant situés respectivement dans des premiers plans radiaux du corps de stator et les éléments de fermeture de l'encoche adjacente (41, 43) étant situés respectivement dans des deuxièmes plans radiaux du corps de stator, les premiers plans radiaux sont différents des deuxièmes plans radiaux.

8. Stator selon la revendication précédente, **caractérisé en ce que** les premiers plans radiaux et les deuxièmes plans radiaux sont distant axialement d'une distance égale à au moins deux feuilles de tôles.

9. Stator selon l'une des revendications précédentes, **caractérisé en ce qu'**un élément de fermeture (452) est formé d'une part par le décalage (452a) d'au moins une des feuilles de tôles d'une encoche adjacente à droite en direction de ladite encoche et d'autre part par un décalage (452b) d'au moins une des feuilles de tôles d'une encoche adjacente à gauche en direction de ladite encoche, les deux décalages étant situés dans un même plan radial.

10. Stator selon l'une des revendications précédentes, **caractérisé en ce qu'**un élément de fermeture (451, 452, 453, 454) est formé par un décalage d'au moins deux feuilles de tôles contingues de telle sorte que l'élement de fermeture présente une hauteur axiale d'au moins deux feuilles de tôles.

11. Stator selon l'une des revendications précédentes, **caractérisé en ce que** pour chaque élément de fermeture d'une encoche (42), au moins une des deux encoches adjacentes présente des traces d'une déformation par introduction radiale d'un outil (60) ayant une dimension orthoradiale supérieure à la largeur d'encoche.

12. Stator selon l'une des revendications précédentes, **caractérisé en ce que** pour chaque élément de fermeture d'une encoche (42), au moins une des deux encoches adjacentes présentes des traces d'une déformation par introduction radiale d'un outil (60) de forme sensiblement sphérique.

13. Stator selon la revendication 11 ou 12, **caractérisé en ce que** la partie de bobinage (51, 52, 53) d'une encoche présente les traces d'un compactage par ladite introduction radiale de l'outil (60).

14. Stator selon l'une des revendications précédentes, **caractérisé en ce que** la partie de bobinage (51, 52, 53) d'une encoche comprend plusieurs fils alignés suivant une colonne.

15. Machine électrique tournante muni d'un stator selon l'une des revendications précédentes.

## Patentansprüche

1. Stator (6) einer drehenden elektrischen Maschine (1) umfassend:
- einen Statorkörper (4), der von einem Stapel von Blechtafeln gebildet ist, wobei der Statorkörper mit einer Achse (X) versehen ist und von einer inneren radialen Fläche und einer äußeren radialen Fläche begrenzt wird,
- Rillen (44), die in dem Statorkörper eingerichtet sind und sich axial erstrecken, wobei zwei Rillen (44) durch einen Zahn (45) getrennt sind, wobei jeder der Rillen einen Rillenboden (48) und eine Rillenöffnung (49) aufweist, wobei die Rillenöffnung auf der Seite der inneren radialen Fläche gelegen ist,
- eine Statorwicklung (5), die von dem Statorkörper getragen wird, die Wicklung umfassend mehrere Wicklungsbereiche (51, 52, 53), wobei jede von ihnen in einer der Rillen aufgenommen ist,
wobei jede der Rillen (44, 41, 42, 43) an der Rillenöffnung mit mindestens einem Rillenverschlusselement (451, 452, 453, 454) versehen ist, so dass der Wicklungsbereich, der in der Rille aufgenommen ist, zwischen dem Rillenboden und dem Verschlusselement gehalten wird,
und **dadurch gekennzeichnet, dass** für jede der Rillen das Verschlusselement von einem Umfangsversatz (451, 452a, 452b, 453, 454) mindestens einer der Blechtafeln des Zahns (45) gebildet ist, der in Richtung der Rille benachbart ist, wobei der Versatz von einer Verformung der Rille bewirkt wird.

2. Stator nach Anspruch 1, **dadurch gekennzeichnet, dass** eine Rille von zweien eine Anzahl N von Verschlusselementen umfasst, wobei N eine Ganzzahl größer oder gleich 2 ist und die übrigen Rillen eine Anzahl von Verschlusselementen streng kleiner als N umfassen.

3. Stator nach Anspruch 2, **dadurch gekennzeichnet, dass** zwei Rillen mit einer Anzahl N von Verschlusselementen beiderseits einer Rille angefügt sind, die eine kleinere Anzahl von Verschlusselementen aufweist.

4. Stator nach einem der vorhergehenden Ansprüche, **dadurch gekennzeichnet, dass**, wobei die Rillen entsprechend des Umfangs des Stators nummeriert sind, die geradzahligen Rillen eine Anzahl von Verschlusselementen umfassen, die sich von jener der ungeradzahligen Rillen unterscheidet.

5. Stator nach einem der vorhergehenden Ansprüche, **dadurch gekennzeichnet, dass** die Verschlusselemente der Rillen (42) axial über die axiale Länge des Statorkörpers verteilt sind.

6. Stator nach Anspruch 5, wenn abhängig von Anspruch 2, **dadurch gekennzeichnet, dass** mindestens eins der Verschlusselemente einer Rille (41, 43), die eine kleinere Anzahl von Verschlusselementen aufweist, in einer radialen Eben gelegen ist, welche die Mitte zweier benachbarter Verschlusselemente einer Rille (42) durchläuft, welche die N Verschlusselemente umfasst.

7. Stator nach einem der Ansprüche 1 bis 5, **dadurch gekennzeichnet, dass** für eine bestimmte Rille (42), wobei die Verschlusselemente dieser Rille jeweils in ersten radialen Ebenen des Statorkörpers gelegen sind und die Verschlusselemente der benachbarten Rille (41, 43) jeweils in zweiten radialen Ebenen des Statorkörpers gelegen sind, sich die ersten radialen Ebenen von den zweiten radialen Ebenen unterscheiden.

8. Stator nach dem vorhergehenden Anspruch, **dadurch gekennzeichnet, dass** die ersten radialen Ebenen und die zweiten radialen Ebenen um einen Abstand axial beabstandet sind, der mindestens gleich zwei Blechtafeln ist.

9. Stator nach einem der vorhergehenden Ansprüche, **dadurch gekennzeichnet, dass** ein Verschlusselement (452) einerseits von dem Versatz (452a) mindestens einer der Blechtafeln einer Rille, die nach rechts in Richtung der Rille benachbart ist, und andererseits von einem Versatz (452b) mindestens einer der Blechtafeln einer Rille, die nach links in Richtung der Rille benachbart ist, gebildet ist, wobei die zwei Versätze in einer selben radialen Ebene gelegen sind.

10. Stator nach einem der vorhergehenden Ansprüche, **dadurch gekennzeichnet, dass** ein Verschlusselement (451, 452, 453, 454) von einem Versatz mindestens zweier Blechtafeln gebildet ist, die derart aneinandergrenzen, dass das Verschlusselement eine axiale Höhe von mindestens zwei Blechtafeln aufweist.

11. Stator nach einem der vorhergehenden Ansprüche, **dadurch gekennzeichnet, dass** für jedes Verschlusselement einer Rille (42) mindestens eine der zwei benachbarten Rillen Spuren einer Verformung durch radiale Einführung eines Werkzeugs (60) aufweist, das eine orthoradiale Abmessung aufweist, die größer als die Rillenbreite ist.

12. Stator nach einem der vorhergehenden Ansprüche, **dadurch gekennzeichnet, dass** für jedes Verschlusselement einer Rille (42) mindestens eine der zwei benachbarten Rillen Spuren einer Verformung durch radiale Einführung eines Werkzeugs (60) mit einer im Wesentlichen sphärischen Form aufweist.

13. Stator nach Anspruch 11 oder 12, **dadurch gekennzeichnet, dass** der Wicklungsbereich (51, 52, 53) einer Rille Spuren einer Verdichtung durch die radiale Einführung des Werkzeugs (60) aufweist.

14. Stator nach einem der vorhergehenden Ansprüche, **dadurch gekennzeichnet, dass** der Wicklungsbereich (51, 52, 53) einer Rille mehrere Drähte umfasst, die entsprechend einer Säule ausgerichtet sind.

15. Drehende elektrische Maschine, die mit einem Stator nach einem der vorhergehenden Ansprüche versehen ist.

## Claims

1. Stator (6) for a rotary electric machine (1) comprising:
- a stator body (4) formed by a stack of laminations, the said stator body being provided with an axis (X) and being delimited by an internal radial surface and an external radial surface,
- slots (44) formed in the said stator body and extending axially, two slots (44) being separated by a tooth (45), each of the two slots having a slot bottom (48) and a slot opening (49), the said slot opening being situated on the same side as the said internal radial surface,
- a stator winding (5) borne by the said stator body, the said winding comprising several winding parts (51, 52, 53) each of them being housed in one of the said slots,
each of the slots (44, 41, 42, 43) being provided, at the slot opening, with at least one slot-closure element (451, 452, 453, 454) so that the winding part that is housed in the said slot is held between the slot bottom and the said closure element, and **characterized in that**, for each of the slots, the said closure element is formed by an circumferential offsetting (451, 452a, 452b, 453, 454) of at least one of the laminations of the adjacent tooth (45) towards the said slot, the said offsetting being brought about by a deforming of the said slot.

2. Stator according to Claim 1, **characterized in that** one slot in two comprises a number N of closure elements, N being an integer greater than or equal to 2 and the remaining slots comprise a number of closure elements that is strictly lower than N.

3. Stator according to Claim 2, **characterized in that** two slots that have a number N of closure elements are flanked on each side by a slot that has a lower number of closure elements.

4. Stator according to one of the preceding claims, **characterized in that**, with the slots numbered around the circumference of the stator, the even-numbered slots comprise a different number of closure elements from the odd-numbered slots.

5. Stator according to one of the preceding claims, **characterized in that** the closure elements that for the slots (42) are axially distributed along the axial length of the stator body.

6. Stator according to Claim 5 when dependent on Claim 2, **characterized in that** at least one of the closure elements for one slot (41, 43) having a lower number of closure elements is situated in a radial plane that passes through the middle of two adjacent closure elements for a slot (42) comprising the N closure elements.

7. Stator according to any one of Claims 1 to 5, **characterized in that**, for a given slot (42), the closure elements for this slot being situated respectively in first radial planes of the stator body and the closure elements for the adjacent slot (41, 43) being situated respectively in second radial planes of the stator body, the first radial planes are different from the second radial planes.

8. Stator according to the preceding claim, **characterized in that** the first radial planes and the second radial planes are axially distant by a distance equal to at least two laminations.

9. Stator according to one of the preceding claims, **characterized in that** a closure element (452) is formed on the one hand by the offsetting (452a) of at least one of the laminations of an adjacent slot to the right in the direction of the said slot and, on the other hand, by an offsetting (452b) of at least one of the laminations of an adjacent slot to the left in the direction of the said slot, the two offsettings being situated in the one same radial plane.

10. Stator according to one of the preceding claims, **characterized in that** a closure element (451, 452, 453, 454) is formed by an offsetting of at least two contiguous laminations so that the closure element has an axial height of at least two laminations.

11. Stator according to one of the preceding claims, **characterized in that**, for each closure element for a slot (42), at least one of the two adjacent slots exhibits traces of deformation through radial insertion of a tool (60) that has an orthoradial dimension greater than the slot width.

12. Stator according to one of the preceding claims, **characterized in that**, for each closure element for a slot (42), at least one of the two adjacent slots exhibits traces of deformation by radial insertion of a tool (60) of substantially spherical shape.

13. Stator according to Claim 11 or 12, **characterized in that** the winding part (51, 52, 53) of a slot exhibits traces of compaction by the said radial insertion of the tool (60).

14. Stator according to one of the preceding claims, **characterized in that** the winding part (51, 52, 53) of a slot comprises several wires aligned in a column.

15. Rotary electric machine provided with a stator according to one of the preceding claims.
